# EUROPEAN PATENT SPECIFICATION

(11) **EP 3 719 813 B1**
(45) Date of publication and mention of the grant of the patent: **14.02.2024**
(21) Application number: 17885442.8
(22) Date of filing: 25.12.2017
(51) Int. Cl.: G21C 9/06, G21C 13/02, G21C 19/317

(54) **METHOD FOR ENSURING HYDROGEN EXPLOSION SAFETY AT NUCLEAR POWER PLANTS**
VERFAHREN ZUR GEWÄHRLEISTUNG DER WASSERSTOFFEXPLOSIONSSICHERHEIT IN EINEM KERNKRAFTWERK
PROCÉDÉ POUR ASSURER LA PROTECTION CONTRE LES EXPLOSIONS D'HYDROGÈNE DANS UNE CENTRALE NUCLÉAIRE

(30) Priority: 30.11.2017 RU 2017141801
(43) Date of publication of application: 07.10.2020
(73) Proprietor: Joint Stock Company "Science and Innovations", Moscow 119180 (RU)
(72) Inventor: IVANOV, Anatoliy Semenovich, Snezhinsk Chelyabinskaya obl. 456773 (RU); SIMONENKO, Vadim Aleksandrovich, Snezhinsk Chelyabinskaya obl. 456776 (RU); LAVRENYUK, Ivan Vladimirovich, Snezhinsk Chelyabinskaya obl. 456776 (RU); BEZGODOV, Evgeniy Vital'evich, Snezhinsk Chelyabinskaya obl. 456776 (RU); PASYUKOV, Sergey Dmitrievich, Snezhinsk Chelyabinskaya obl. 456773 (RU); UL'YANOV, Sergey Mikhailovich, Snezhinsk Chelyabinskaya obl. 456770 (RU); PAVLENKO, Aleksandr Valerievich, Snezhinsk Chelyabinskaya obl. 456776 (RU); ANIKIN, Nikolai Borisovich, Snezhinsk Chelyabinskaya obl. 456776 (RU); TYAKTEV, Aleksandr Anatol'evich, Snezhinsk Chelyabinskaya obl. 456776 (RU); FEDYUSHKIN, Viktor Nikolaevich, Snezhinsk Chelyabinskaya obl. 456770 (RU); POPOV, Il'ya Aleksandrovich, Snezhinsk Chelyabinskaya obl. 456776 (RU)
(74) Representative: Friese Goeden Patentanwälte PartGmbB
(86) International application number: PCT/RU2017/000966
(87) International publication number: WO 2019/108083

(56) References cited:
- CN-B- 104 500 868
- US-A- 5 740 217
- US-A1- 2010 296 619
- US-A1- 2012 121 057

## Description

The invention relates to emergency protection of nuclear power plants, particularly to technologies for mitigation of consequences or fire prevention and prevention of explosive gas accumulation, which ensure hydrogen explosion safety in premises of the containment dome (hereinafter - CNT) at nuclear power plants (hereinafter - NPP) with water-cooled power reactor (hereinafter - VVER).

A method is known for mitigating consequences of severe accidents, related to reduction of hydrogen amount in NPP CNT premises through localized catalytic oxidation of hydrogen inside a recombiner housing, described in RF Patent No. 2264853. The said technical solution reduces hazard by installing a certain quantity of passive catalytic hydrogen recombiners (hereinafter - PCHR) in premises of the nuclear power plant containment dome. With PCHR operating efficiency, the hydrogen-containing compound can either not inflame or may burn less intensively due to reduced hydrogen concentration. An additional positive factor is the medium mixing, localized in the recombiner's vicinity, which is caused by the outflow of hydrogen-poor hot gases from the recombiner top, which facilitates the reduction of hydrogen concentration in the area adjacent to the recombiner. A drawback of this technical solution is the risk of inflammation of hydrogen-containing steam-gas compounds, mixture or jet (hereinafter - HSGM) in the region, adjoining the recombiner, that may occur at sufficiently high hydrogen concentrations due to catalyst surface warming up to high temperatures because of intensive hydrogen oxidation reactions.

A method is known for mitigating consequences of severe accidents, described in RF Patent No. 2595639, performed by reducing the power load on containment dome structural elements, due to heat withdrawal from CNT premises, accompanied with reduction of temperature and pressure inside the premises. This, in turn, is accompanied with steam condensation on the walls of CNT premises. The dropping of condensed water under the force of gravity additionally agitates the mixture and facilitates reduction of stagnant regions with an increased hydrogen concentration. A drawback of the said technical solution is the increased risk of HSGM inflammation due to a reduced concentration of water vapor, being a phlegmatizing agent in the hydrogen combustion reaction.

A method is also known for preventing the inflammation and explosion of hydrogen-air mixtures, described in RF Patent No. 2081892, which consists in the addition or injection of inhibitors into hydrogen-air mixtures in order to narrow the region of hydrogen-air mixture inflammation. The drawbacks of the said method are as follows:
- a small reduction of the inflammation area, i.e. inflammation event probability is not significantly reduced;
- inhibitor supply and distribution systems need power supply, i.e. they are not passive components of the safety assurance complex, which makes this method unusable for a greater class of severe accidents with power loss;
- the inhibitor is supplied, as a rule, at the initial stage of the accident due to the uncertainty of the burning start moment, thereat, the absence of a mechanism for ensuring uniform filling of CNT premises with inhibitor may cause its local accumulation in a CNT premise remote from the hydrogen inflow point, which does not affect the inflammation probability in any way;
- not all inhibitors are neutral towards structural materials at NPP.

A method is known for passive inertisation of gas mixture in a nuclear power plant protective reservoir, described in RF Patent No. 2134917, which is devoid of some of the drawbacks of the previous patent. The method, implemented by means of a device for passive inertisation of gas mixture in the nuclear power plant protective reservoir, employs substances that start emitting carbon dioxide at heating of the atmosphere inside the containment dome or at PCHR heating after its operation start. Thus, the method is passive, while inhibitor is released throughout the course of accident. The drawbacks of this method are the risk of a chemical reaction between the released gas and the catalyst bed of PCHR, which may reduce PCHR performance or cause PCHR failure, as well as the insignificant narrowing of the area of hydrogen-air mixture inflammation limits, as compared to the inhibitors stated in the previous patent.

The method described in RF Patent No. 2473993 includes the termination or reduction of the rate of hydrogen burning in hydrogen-containing steam-gas mixture in case of its inflammation in containment dome premises through its recombination by means of a PCHR.

The drawbacks of this technical solution are as follows:
- slow attainment of the rated capacity mode of the recombiner;
- possible formation of stagnant zones with increased hydrogen concentration in overlying layers due to hydrogen inflow into the recombiner housing from underlying layers;
- relatively high hydrogen concentrations create the risk of recombiner "acceleration" up to HSGM inflammation in its surroundings, followed by burning propagation across the CNT premises.

US 2010/296619 A1 discloses reflectors with apertures.

US 2012/121057 A1 discloses a method for ensuring hydrogen explosion safety at nuclear power plants according to the preamble of claim 1.

It is an object of the invention to further ensure hydrogen explosion safety in premises of the containment dome of a nuclear power plant.

The object of the invention is achieved by the method according to claim 1. Preferred embodiments of the invention are disclosed in the dependent claims.

The task of the invention is the mitigation of hazardous consequences of severe accidents at NPP with VVER, such as explosion-like (fast) combustion or detonation processes of the gas medium in NPP CNT premises.

The technical result attained by the invention consists in the reduction of the risk of gas medium inflammation in premises of NPP CNT, as well as in the provision of self-damping of weak burning waves, reduction of their intensity in case of gas medium inflammation in premises of NPP CNT and in reduction of dynamic loads on walls of premises of NPP CNT.

The invention is illustrated by the following graphic materials.

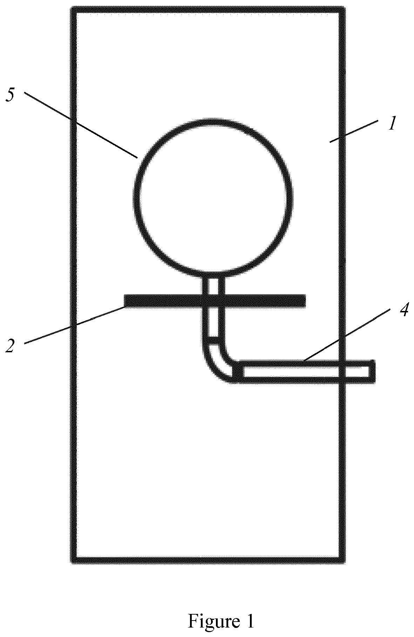

Figure 1 schematically shows a variant of reflector placement in the steam generator premise.

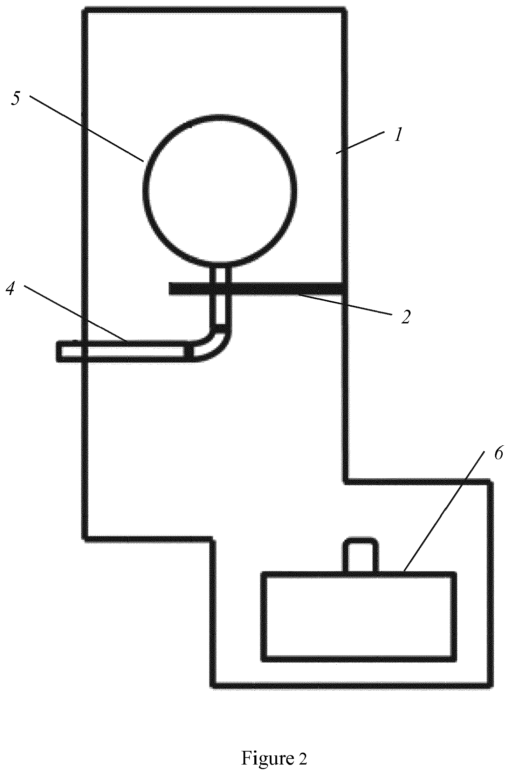

Figure 2 schematically shows a variant of reflector placement in the premise of a steam generator connected with the bubbler premise.
Figure 3 schematically shows a perforated cylindrical casing intended for installation on a part of the nuclear reactor primary circuit.
Figure 4 shows a layout of an experimental setup in a mockup without a reflector installed therein.
Figure 5 shows a graph of gas concentration distribution over the mockup height in case of an experiment without a reflector.
Figure 6 shows a layout of an experimental setup in a mockup with a reflector installed therein.
Figure 7 shows the A-A section of a reflector installed in a mockup.
Figure 8 shows a graph of gas concentration distribution over the mockup height in case of an experiment with a reflector.
Figure 9 shows a layout of an experimental setup in a mockup with a partition overlapping the channel cross-section by 90 %.
Figure 10 shows a layout of an experimental setup in a mockup without a partition overlapping the channel cross-section.
Figure 11 shows a layout of an experimental setup in a mockup with a partition overlapping the channel cross-section by 65 %.

The suggested technical solution - a method for ensuring hydrogen explosion safety at nuclear power plants - is explained by an example of an embodiment described below. The given example is not the only possible one, but it clearly demonstrates the possibility of achieving the declared technical result. The invention is defined in the appended claims.

A method for ensuring hydrogen explosion safety at nuclear power plants comprises the following actions.

Premises 1 of NPP CNT are ventilated when hydrogen consistence reaches 2%, thereat the said ventilation is emergency ventilation and may actuate at greater hydrogen contents, depending on conditions of inflammation of the HSGM present in premises.

Hydrogen in premises 1 of NPP CNT is recombined by catalytic oxidation in hydrogen recombiners (not shown in the figures), preliminarily installed in the containment dome premises, quantity of said recombiners being selected based on premise size.

Reflectors are placed in the way of potentially emergency propagation of a HSGM jet under pressure in premises 1 of NPP CNT; said reflectors can be waterproof and heatproof aluminum shields 2 and perforated casings 3. Shields 2 are placed so that they overlap the apertures between the walls of premises 1 of NPP CNT in their installation locations by 60% of the area of said apertures, while perforated casing 3 is installed on pipeline 4 of the nuclear reactor primary circuit. Thereat, the size of shield 2 can make up from 20 to 65% of the surface area of the aperture, formed by the walls of premise 1 of NPP CNT, whose smallest and largest size is selected based on the fact that, if shield 2 has a size less than 20% of the aperture surface area, the diameter of HSGM jet under pressure can be larger than the surface area of shield 2 in the contact point, which causes the penetration of a part of the jet into premise 1 of NPP CNT, located behind shield 2, without the necessary mixing with the surrounding air medium of premise 1 of NPP CNT, and HSGM concentration only in one part of premise 1 of NPP CNT. If shield 2 has a size over 65% of the aperture surface area, upon contact with a HSGM jet under pressure there occurs uniform mixing with the air medium of premise 1 of NPP CNT, and in case of HSGM inflammation in one part of premise 1 of NPP CNT and flame penetration into the other part of premise 1 of NPP CNT there can be turbulization of the flame flow passing through the aperture, formed by shield 2, which leads to significantly accelerated flame propagation.

Casing 3 is placed chiefly from the side of the open space near the pipeline, i.e. not from the side of the wall or the nearby pipeline, which results in efficient mixing of the delivery HSGM at its outflow from the pipeline with the air medium in premise 1 of NPP CNT.

Apertures are made in the walls between premises 1 of NPP CNT with a size equal to 40% of the surface area of said walls, thereat said apertures in the upper part of the walls between premises 1 of NPP CNT, which adjoins the ceiling, are made with formation of a flow-through space, i.e. at the ceiling level of premises 1 of NPP CNT the above-aperture part of the wall is missing and the ceilings of premises 1 of NPP CNT have no obstacles for HSGM flow-over from one premise 1 of NPP CNT to another. Thereat, apertures in walls between premises 1 of NPP CNT can take from 35% and more of the surface area of these walls. The smallest aperture size is selected based on the fact that, in case of HSGM inflammation in one premise 1 of NPP CNT and flame penetration into another premise 1, there can be turbulization of the flame flow passing through the aperture in the wall of premise 1 of NPP CNT, leading to significantly accelerated flame propagation, while the largest size is selected based on design need.

Excess heat in areas of potential localization of HSGM burning sources is withdrawn by lining the surfaces of equipment installed in premises 1 of NPP CNT - steam generator 5 and bubbler 6, as well as ceilings and upper portions of the walls of premises 1 of NPP CNT to 30% of their height with a highly thermally conductive material, for instance aluminum.

Hydrogen explosion safety of nuclear power plants according to the said method is ensured as follows.

In case of a severe accident, related to HSGM outflow in premises 1 of NPP CNT, ventilation and hydrogen recombination are simultaneously performed when the 2% hydrogen content is reached. The said actions aim to reduce hydrogen content in premises 1 of NPP CNT.

When a HSGM jet under pressure flows out in premise 1 of NPP CNT, aluminum shield 2, installed on its way, facilitates the uniform mixing of HSGM in premise 1 of NPP CNT, thus preventing HSGM localization in a single area of premise 1 of NPP CNT. Also, in case of HSGM jet under pressure outflow in premise 1 of NPP CNT from pipeline 4 of the nuclear reactor primary circuit, whereon perforated casing 3 is installed, the latter also facilitates the HSGM mixing in premise 1 of NPP CNT, thus ensuring a multitude of differently directed perforations of HSGM jets in the vicinity of pipeline 4 of the nuclear reactor primary circuit. Thus, the uniform mixing of HSGM in premises 1 of NPP CNT facilitates improved hydrogen recombination due to the involvement of all hydrogen recombiners installed in premises 1 of NPP CNT. If there is no mixing of the steam-hydrogen mixture in premises 1 of NPP CNT, mainly the recombiners located in the areas of steam-hydrogen mixture localization are involved. The uniform mixing of HSGM, preventing its localization in one area of premise 1, prevents HSGM inflammation.

Moreover, in case of outflow of a HSGM jet under pressure in premise 1 of NPP CNT, the apertures (forming a flow-through space) in the upper portion of walls, which adjoins the ceiling, between premises 1 of NPP CNT facilitate the flow-over of HSGM from one premise 1 of NPP CNT to another, thus reducing the HSGM concentration in the premise where outflow is taking place, and allows for activating the ventilation and recombiners located in other premises 1 of NPP CNT.

In case of ignition of HSGM in one or several premises 1 of the nuclear reactor containment dome, the apertures in their walls, size whereof is equal to 40% of the surface area of said walls, prevent turbulization of the burning flow passing through the said apertures, thus reducing the speed of burning HSGM propagation.

Also, in case of ignition of HSGM in one or several premises 1 of NPP CNT, the burning flow of flame floats up from the bottom portions of premises 1 of NPP CNT to the upper ones (areas of potential localization of HSGM burning sources), due to the fact that hydrogen concentration is higher in the upper portions of premises 1 of NPP CNT. In the upper portions of premises 1 of NPP CNT, which comprise the equipment - steam generators 5 and bubblers 6, ceilings and upper portions of the walls of premises 1 of NPP CNT to 30% of their height, excess heat is withdrawn by lining the surfaces of the said portions with a highly thermally conductive metal, which is aluminum. Heat transfer by the HSGM burning source to the surface, line with a highly thermally conductive metal, facilitates the dying-out of the HSGM burning source or reduction of its rate, thus preventing further inflammation of HSGM in other parts of premise 1 of NPP CNT or the passing of HSGM burning to other premises 1 of NPP CNT. Thereat, aluminum shields 2 installed in premise 1 of NPP CNT and perforated aluminum casings 3, installed on pipeline 4 of the nuclear reactor primary circuit, receive the heat from the HSGM burning sources, which also facilitates the dying-out of the HSGM burning source or reduction of burning rate and prevents further HSGM inflammation in other parts of premise 1 of NPP CNT or the passing of HSGM burning into other premises 1 of NPP CNT.

Efficiency of the suggested method for ensuring hydrogen explosion safety at nuclear power plants has been experimentally confirmed on mockups. Experimental data were obtained on the inflammation limits for HSGM at the pressures and temperatures, typical for severe accidents, as well as data on development and change of HSGM combustion conditions in mockups of NPP CNT premises in case of HSGM jet outflows, typical for severe accidents at NPP with VVER.

### Example 1.

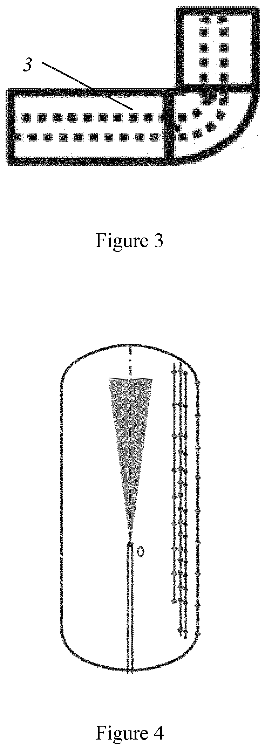

The experiment used a mockup in the form of chamber 7 (Fig. 4), having the height of 5 m, diameter of 2 m, working volume of 14.6 m³. The chamber was preheated to 110 C°, it was filled with air at atmospheric pressure. The said chamber was supplied with a mixture corresponding to the design HSGM at its outflow in NPP CNT premises in case of severe accidents, while the average content of hydrogen-steam-air components of HSGM matched the following percentages: 10-34-56 respectively. Gases were supplied from point O shown in Fig. 4, located at the height of 3.14 m from the bottom point of the chamber volume.

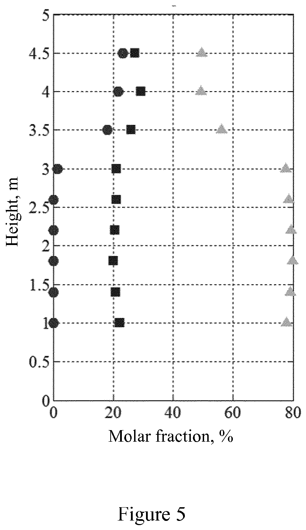

Upon completion of HSGM supply by means of gas analyzers (not shown in the figures), installed with an interval of 0.5 m over the chamber height, the contents of hydrogen-steam-air components of HSGM were measured. The experiment results are shown in Fig. 5 as a point diagram, with round markers designating hydrogen, square markers designating steam, and triangular markers designating air. Thus, the diagram shows that the distribution of hydrogen-steam-air components of HSGM over the chamber height is not uniform, in particular, the largest hydrogen concentration was recorded starting from the point of HSGM supply from point O and up to the dome of chamber 7.

After the obtained HSGM stabilized, it was inflamed by means of a spark element (not shown in the figure) at the height of 3.5 m, which resulted in floating-up of the burning thermal flow to the dome of chamber 7, while burning rate and pressure on the walls of chamber 7 increased. The burning died out only after hydrogen combustion in the HSGM, which was localized in the upper portion of chamber 7 under the dome, while the heat emitted during burning facilitated the continuation of burning.

### Example 2.

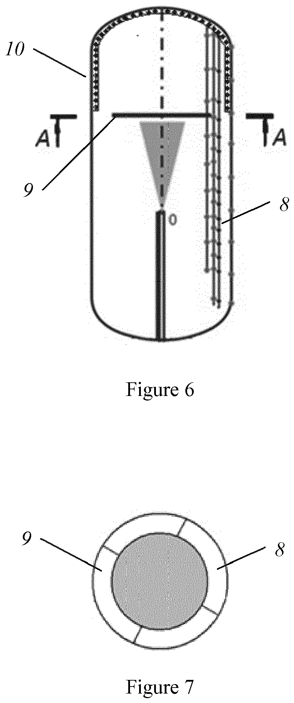

The experimental setup corresponds to the description of the experiment in example 1, and differs from it in that at the height of 3.4 m from the bottom point of the volume of chamber 8 (Fig. 6) a flat reflector was additionally installed in the form of shield 9 (Fig. 6 and Fig. 7), overlapping the chamber cross-section by ≈ 65%. Thereat, the upper portion of the inner surface of chamber 8 below the dome and about 30 % of walls from the dome over the height was lined with highly thermally conductive metal 10. Aluminum was used as a lining highly thermally conductive metal in the experimental model.

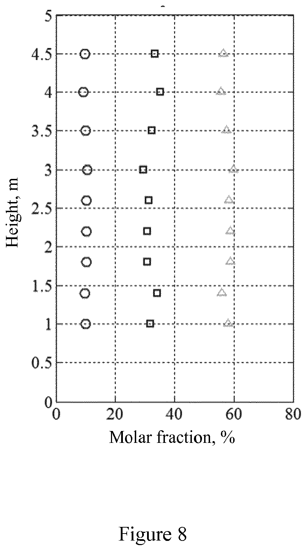

In this experimental setup the supplied HSGM contacted shield 9, thus ensuring more uniform mixing of HSGM with the air medium of chamber 8 and uniform distribution of HSGM components. The results of measuring the content of hydrogen-steam-air components of HSGM over the height of chamber 8, obtained by means of gas analyzers, are shown in Figure 8, where on the presented point diagram the round markers designate hydrogen, square markers designate steam, and triangular markers designate air.

Upon completion of gas supply and HSGM stabilization, the mixture was inflamed by means of a spark element (not shown in the figure) at the height of 3.5 m. Gas concentration distribution at the moment of inflaming was more uniform than during the experiment described in example 1, and corresponding to the ratio of hydrogen-steam-air components of HSGM: 10-34-56 respectively.

The visualization procedure was used to record the floating-up of the flame focus and its localization under the dome of chamber 8. Thereat, the flame source transferred the heat to the surface of the dome of chamber 8, lined with highly thermally conductive metal 10, after which the burning source temperature decreased and its hydrogen concentration decreased (due to burning), which jointly made the flame die out. After the flame died out, a repeated localization of hydrogen in HSGM in the upper portion of the dome of chamber 8 took place, which was ensured by the movement of hydrogen-rich HSGM from the bottom portion of chamber 8 to the upper one. Then the burning was initiated again, which was stopped by the aforesaid method. The cycle of burning initiation and dying-out was repeated until hydrogen concentration in HSGM decreased to a concentration not inflammable by means of the spark element.

### Example 3

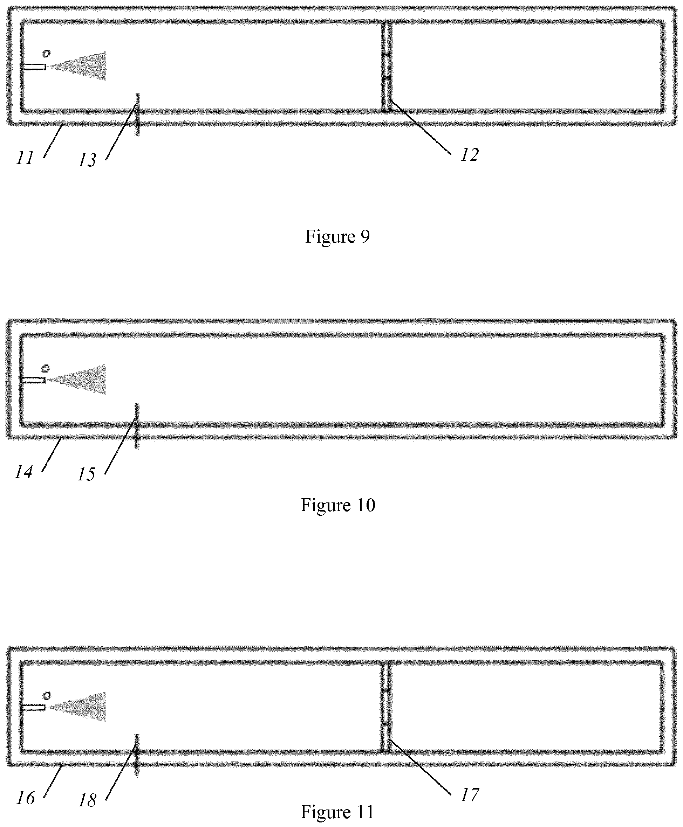

The experiment used a mockup in the form of chamber 11 (Fig. 9), having a square section with the side of 138 mm and length of about 1.5 m. Partition 12, overlapping the channel cross-section by 90 %, was placed in chamber 11. The said chamber was supplied with a mixture corresponding to the design HSGM at its outflow in NPP CNT premises in case of severe accidents, while the average content of hydrogen-steam-air matched the following percentages: 10-34-56 respectively. Gases were supplied from point O (Fig. 9

When the obtained HSGM stabilized, it was inflamed by means of spark element 13. The visualization procedure has recorded that the flame front displaced the unburnt mixture through partition 12, making it turbulent, thus increasing the dynamic loads in 3 times. When the flame approached partition 12, the burning intensified abruptly and the flame flow quickly went over to the other part of chamber 11, separated by partition 12.

### Example 4

The experimental setup corresponds to the description of the experiment in example 3, and differs from it in that a partition, overlapping the channel cross-sections, was not placed in chamber 14. To chamber 14 (fig. 10) HSGM shown at example 3 has been placed. Gases were supplied from point O (Fig. 10).

When the obtained HSGM stabilized, it was inflamed by means of spark element 15. The visualization procedure has recorded that the flame front propagated with a constant speed, did not become turbulent, and the burning did not intensify abruptly.

### Example 5

The experimental setup corresponds to the description of the experiment in example 3, and differs from it in that partition 17 was placed in chamber 16, overlapping the channel cross-section by 65 %. To chamber 16 (fig. 11) HSGM shown at example 3 has been placed. Gases were supplied from point O (Fig. 11).

When the obtained HSGM stabilized, it was inflamed by means of spark element 18. The visualization procedure has recorded that the flame front displaced the unburnt mixture through partition 17, while increase of dynamic loads was only 1.4 times greater than the value recorded in the experiment of example 4. Thereat, when the flame approached partition 17, the burning did not intensify abruptly, while the flame flow went over to the other part of chamber 16, separated by partition 17, without acceleration.

For the invention as it is characterized in the claims, feasibility of the method for ensuring hydrogen explosion safety at nuclear power plants and the possibility to attain the specified technical result were confirmed.

## Claims

1. Method for ensuring hydrogen explosion safety at a nuclear power plant comprising a nuclear reactor, the method comprising ventilation of a plurality of premises (1) inside a containment dome of a nuclear reactor and hydrogen recombination in the plurality of premises (1) by catalytic oxidation, wherein a reflector (2) is placed in the way of a potential emergency propagation of a pressure hydrogen-containing steam-gas jet from one of the plurality of premises (1) to another of the plurality of premises (1), wherein apertures are made in first walls between the plurality of premises (1), wherein a size of the apertures is equal to minimum 35% of the surface area of said first walls, while excess heat is withdrawn in areas of potential localization of hydrogen-containing steam-gas mixture burning sources,
**characterized in that** the reflector (2) is provided in the form of a perforated waterproof and heatproof casing (3) installed on pipelines (4) of the nuclear reactor.

2. Method according to claim 1, **characterized in that** the plurality of premises (1) is ventilated when the hydrogen content in the premises (1) exceeds 2%.

3. Method according to any of the preceding claims, **characterized in that** the reflector (2) further comprises a waterproof and heatproof shield (2, 9), overlapping at least one of the apertures by 20 to 65% of the surface area of the said aperture.

4. Method according to any of the preceding claims, **characterized in that** excess heat in areas of potential localization of hydrogen-containing steam-gas mixture burning sources is withdrawn by lining the surfaces of equipment installed in the premises (1), and the ceilings and upper portions of second walls of the containment dome with a highly thermally conductive metal (10) to 30% of their height.

5. Method according to any of the preceding claims, **characterized in that** the apertures form a flow-through space, and are arranged in an the upper portion of the second walls.

## Patentansprüche

1. Das Verfahren der Gewährleistung der Wasserstoffexplosionssicherheit eines einen Kernreaktor betreibenden Kernkraftwerks, umfassend die Lüftung der Mehrzahl von Räumen (1) der Sicherheitshülle des Kernreaktors und Durchführung der Rekombination von Wasserstoff in der Mehrzahl von Räumen (1) durch dessen katalytische Oxydation, dabei wird auf dem Weg der potentiellen Havarieausbreitung des wasserstoffhaltigen Gas-Dampf-Druckstrahls aus einem der Mehrzahl von Räumen (1) in einen anderen der Mehrzahl von Räumen (1) ein Reflektor (2) angebracht wird, dabei sind in den Primärwänden zwischen der Mehrzahl von Räumen (1) die Durchbrüche gemacht, deren Größe mindestens 35% der Fläche der genannten Primärwände beträgt, und an den Stellen der potentiellen Lokalisierung von Verbrennungsherden des wasserstoffhaltigen Gas-Dampf-Gemisches erfolgt die Überschusswärmeabführung, die sich dadurch unterscheidet, dass der Reflektor (2) als eine auf den Rohrleitungen (4) des Kernreaktors zu installierende gelochte wasser- und feuerbeständige Hülle (3) ausgeführt ist.

2. Das Verfahren gemäß P. 1, das sich dadurch unterscheidet, dass die Lüftung der Mehrzahl von Räumen (1) durchgeführt wird, wenn der Wasserstoffgehalt in den Räumen (1) 2% überschreitet.

3. Das Verfahren gemäß einem der oben genannten Punkte, das sich dadurch unterscheidet, dass der Reflektor (2) zusätzlich eine wasser- und feuerbeständige Abschirmung (2, 9) hat, die mindestens an einem der Durchbrüche von 20 bis 65% der Fläche des genannten Durchbruchs überdeckt.

4. Das Verfahren gemäß einem der oben genannten Punkte, das sich dadurch unterscheidet, dass die Überschusswärme an den Stellen der potentiellen Lokalisierung von Verbrennungsherden des wasserstoffhaltigen Gas-Dampf-Gemisches dadurch abgeführt wird, dass die Oberflächen der in den Räumen (1) aufzustellenden Ausrüstungen, Decken und oberen Abschnitten der Sekundärwände von Räumen der Sicherheitshülle auf 30% deren Höhe mit stark wärmeleitendem Metall (10) bekleidet werden.

5. Das Verfahren gemäß einem der oben genannten Punkte, das sich dadurch unterscheidet, dass die Durchbrüche einen durchgehenden Raum bilden und im oberen Teil der Sekundärwände angebracht sind.

## Revendications

1. Procédé pour assurer la protection contre les explosions d'hydrogène dans une centrale nucléaire contenant un réacteur nucléaire, comprenant la ventilation d'une pluralité de salles (1) de l'enceinte de confinement du réacteur nucléaire et la recombinaison de l'hydrogène dans une pluralité de locaux (1) au moyen de son oxydation catalytique, dans laquelle un réflecteur (2) est placé sur la voie d'une propagation potentiellement dangereuse d'un jet de gaz-vapeur contenant de l'hydrogène sous pression d'une pluralité de locaux (1) à une autre d'une pluralité de locaux (1), dans ce cas, on pratique dans les premiers parois entre la pluralité de locaux (1) des trous ayant une taille égale à 35 % de la surface desdites parois, et la chaleur excessive est évacuée des zones de localisation potentielle de sources de combustion d'un mélange gaz-vapeur contenant de l'hydrogène, **caractérisé en ce que le réflecteur** (2) est réalisé sous la forme d'une enveloppe perforée résistante à l'humidité et à la chaleur (3), installée sur les conduites (4) du réacteur nucléaire.

2. Procédé selon la revendication 1, **caractérisé en ce que** la pluralité de locaux (1) est ventilée lorsque la teneur en hydrogène dans les locaux (1) atteint plus de 2 %.

3. Procédé selon l'une quelconque des revendications précédentes, **caractérisé en ce que** le réflecteur (2) comprend en outre un écran étanche à l'eau et à la chaleur (2, 9) recouvrant au moins l'une des trous de 20 à 65% de la surface de ladite trou.

4. Procédé selon l'une quelconque des revendications précédentes, **caractérisé en ce que** la chaleur excessive dans les zones de localisation potentielle des sources de combustion d'un mélange vapeur-gaz contenant de l'hydrogène est évacuée en recouvrant d'un métal hautement conducteur thermique (10) les surfaces des équipements installés dans les locaux (1), les plafonds et les parties supérieures des secondes parois des locaux de l'enceinte de confinement à 30 % de leur hauteur.

5. Procédé selon l'une quelconque des revendications précédentes, **caractérisé en ce que** les trous forment un espace de passage et sont disposées dans une partie supérieure des deuxièmes parois.
